# EUROPÄISCHE PATENTSCHRIFT

(11) **EP 2 169 317 B1**
(45) Veröffentlichungstag und Bekanntmachung des Hinweises auf die Patenterteilung: **06.01.2016**
(21) Anmeldenummer: 08016842.0
(22) Anmeldetag: 25.09.2008
(51) Int. Cl.: F24D 3/14

(54) **Mehrschichtige Platte und Verfahren zur Montage einer mehrschichtigen Platte**
Multi-layer board and method for mounting a multi-layer board
Plaque multicouche et procédé de montage d'une plaque multicouche

(43) Veröffentlichungstag der Anmeldung: 31.03.2010
(73) Patentinhaber: Roth Werke GmbH, 35232 Dautphetal (DE)
(72) Erfinder:
(74) Vertreter: Rohmann, Michael

(56) Entgegenhaltungen:
- EP-A- 1 835 234
- DE-A1- 3 035 049
- DE-A1- 3 248 488
- DE-A1- 10 307 686
- DE-U1- 29 621 836
- DE-U1-202006 015 545
- US-A1- 2006 272 796
- "Excerpt ED - Niemann; Gustav" MASCHINENELEMENTE. BD. 1: KONSTRUKTION UND BERECHNUNG VON VERBINDUNGEN, LAGERN, WELLEN, SPRINGER VERLAG, 1. Januar 1981 (1981-01-01), Seite 26, XP007908163 ISBN: 978-3-540-06809-9

## Beschreibung

Die Erfindung betrifft eine mehrschichtige Platte zum Heizen und/oder Kühlen von Gebäuden. Die erfindungsgemäßen mehrschichtigen Platten sind für die Aufnahme von Rohren für ein Wärmeträgermedium vorgesehen. Sie können auf Böden von Gebäuden verlegt bzw. montiert werden und sind dann Bestandteil einer Fußbodenheizung. Die erfindungsgemäßen mehrschichtigen Platten können aber auch an den Wänden und/oder Decken eines Gebäudes verlegt bzw. montiert werden.

Aus DE 197 55 856 A1 ist eine mehrschichtige Platte, die die Merkmale des Oberbegriffs von Anspruch 1 aufweist, bekannt. Die mehrschichtige Platte eignet sich für ein Flächenheizungssystem mit im Boden oder in einer Wand eines Raums anzubringenden Rohren. Die mehrschichtige Platte weist eine Schaumkunststoffplatte auf, die vorderseitig mit als Metallblechen ausgebildeten Wärmeleitplatten versehen ist. Jedes Metallblech weist eine geradlinige halbzylinderförmige Vertiefung zur Aufnahme der Rohre auf. Auf der Oberseite der Schaumkunststoffplatte wird eine Mehrzahl derartiger Metallbleche nebeneinander bzw. hintereinander angeordnet. Diese mehrschichtige Platte weist aber beachtliche Nachteile auf. Wenn die Rohre vor Ort bzw. am Montageort in die Vertiefungen eingedrückt werden sollen, erfolgt eine Biegung der darunter angeordneten Schaumkunststoffplatte und dadurch wird das Einrasten der Rohre beachtlich erschwert, da sich die Öffnung der Vertiefung unter dem Einfluss der Biegung verschließt. Außerdem kommt es häufig vor, dass die Schaumkunststoffplatte beim Eindrücken der Rohre beschädigt wird bzw. bricht. Diese Probleme sind insbesondere dann gravierend, wenn die Schaumkunststoffplatte bei der Montage der Rohre nicht flächig bzw. nicht vollflächig auf einem Untergrund aufliegt. Fernerhin ist die Ausgestaltung dieser mehrschichtigen Platte mit einer Mehrzahl von Metallblechen auf der Schaumkunststoffplatte komplex und aufwendig.

Aus EP 1 835 234 A2 ist ein Fußbodenheizungssystem bekannt, welches eine Basisschicht aus Kunststoff sowie eine darauf aufgetragene folienartige Schicht aus Aluminium aufweist. Sowohl die Basisschicht als auch die folienartige Schicht aus Aluminium weisen Kanäle auf, in welche Rohre eingeklemmt werden können. Zum Boden hin wird die Basisschicht durch eine Stützstruktur verstärkt. Die Oberseite der folienartigen Schicht aus Aluminium wird von einer Abdeckschicht verdeckt. Demzufolge wird ein Fußbodenheizungssystem mit insgesamt vier Schichten vorgeschlagen.

Nachteilig hieran ist, dass die Stützstruktur die Dicke des Fußbodenheizungssystems vergrößert. Würde die Stützstruktur jedoch weggelassen, so würde dies zu einer nicht unerheblichen Instabilität während der Montage führen. Dies trifft in besonderem Maße auf die Montage von Flächenheizsystemen an Wänden und Decken zu. Die Montage wird insbesondere durch sich umbiegende bzw. abknickende Flächenheizungselemente erschwert, welche insbesondere im Bereich der Kanäle sich biegen bzw. dort einknicken.

Demgegenüber liegt der Erfindung das technische Problem zugrunde, eine mehrschichtige Platte der eingangs genannten Art anzugeben, mit der eine einfache, wenig aufwendige, funktionsfreie und zwangsfreie Montage von Rohren möglich ist.

Zur Lösung des technischen Problems lehrt die Erfindung zunächst eine mehrschichtige Platte zum Heizen und/oder Kühlen von Gebäuden, wobei zumindest eine Wärmeleitplatte aus einem Material hoher Wärmeleitfähigkeit vorgesehen ist, wobei die Wärmeleitplatte eine Mehrzahl von Kanälen für die Aufnahme von Rohren für ein Wärmeträgermedium aufweist,
wobei die Wärmeleitplatte mit ihrer Rückseite in eine Schaumkunststoffplatte eingebettet ist bzw. an eine Schaumkunststoffplatte angeschlossen ist,
wobei die Schaumkunststoffplatte mit zumindest einem die Schaumkunststoffplatte zumindest teilweise durchsetzenden Verstärkungselement verstärkt ist,
und wobei die Verstärkungselemente zumindest zum Teil an der Wärmeplatte anliegen.

Erfindungsgemäße mehrschichtige Platten können im montierten Zustand sowohl zum Heizen als auch zum Kühlen eines Gebäudes bzw. eines Raums in einem Gebäude eingesetzt werden. Dazu können die mehrschichtigen Platten am Boden und/oder an den Wänden und/oder an der Decke eines Raumes montiert werden. Dass die Wärmeleitplatte aus einem Material hoher Wärmeleitfähigkeit besteht, meint insbesondere, dass die Wärmeleitplatte eine höhere bzw. eine deutlich höhere Wärmeleitfähigkeit aufweist als die Schaumkunststoffplatte. Gemäß einer bevorzugten Ausführungsform ist einer Schaumkunststoffplatte einer mehrschichtigen Platte lediglich eine Wärmeleitplatte zugeordnet. Bei dem Wärmeträgermedium handelt es sich um ein fluides Medium, vorzugsweise um ein flüssiges Medium, insbesondere um Wasser.

Es ist möglich, Rahmen der Erfindung, dass die mehrschichtige Platte werksseitig ohne eingepasste Rohre gefertigt ist und dass die Einbringung bzw. Einpassung der Rohre in die Kanäle der Platte am Montageort der Platte vorgesehen ist. Vorzugsweise erfolgt die Einbringung der Rohre in die Kanäle nach der Positionierung bzw. Fixierung der Platte am Boden oder an der Wand oder an der Decke eines Raumes.

Der Erfindung liegt die Erkenntnis zugrunde, dass mit der erfindungsgemäßen mehrschichtigen Platte eine einfache, funktionssichere, flexible und zwangfreie Montage der Rohre insbesondere vor Ort bzw. am Montageort möglich ist. Der Erfindung liegt weiterhin die Erkenntnis zugrunde, dass dazu die Verstärkung der Schaumkunststoffplatte mit dem zumindest einen Verstärkungselement effektiv beiträgt. Weiterhin wurde im Rahmen der Erfindung erkannt, dass zur Lösung des technischen Problems eine Wärmeleitplatte mit einer Mehrzahl von Kanälen zweckmäßig ist. Auch hierdurch wird eine Stabilisierung der mehrschichtigen Platte erzielt, wodurch die Montage der Rohre vor Ort erleichtert wird. Es ist möglich, dass die Verstärkung der Schaumkunststoffplatte mit dem zumindest einen Verstärkungselement werksseitig erfolgt.

Zweckmäßigerweise handelt es sich bei dem Material hoher Wärmeleitfähigkeit für die Wärmeleitplatte um ein Metall und/oder um Kohlenstoff, insbesondere um Graphit. Gemäß einer bevorzugten Ausführungsform wird für das Material hoher Wärmeleitfähigkeit für die Wärmeleitplatte zumindest ein Metall aus der Gruppe "Aluminium, Stahl, Kupfer" ausgewählt. Nach einer empfohlenen Ausführungsvariante wird eine Wärmeleitplatte aus Aluminium bzw. ein Aluminiumblech als Wärmeleitplatte eingesetzt. Die Wärmeleitplatte kann unter anderem als Blech oder auch als Folie ausgebildet sein. Die Dicke der Wärmeleitplatte beträgt zweckmäßigerweise 0,1 bis 2 mm, bevorzugt 0,2 bis 1,5 mm und sehr bevorzugt 0,3 bis 0,7 mm.

Vorzugsweise deckt die zumindest eine Wärmeleitplatte zumindest den größten Teil der darunter angeordneten Schaumkunststoffplatte ab. Größter Teil meint hier insbesondere zumindest 60 %, zweckmäßigerweise zumindest 70 %, bevorzugt zumindest 75 % und sehr bevorzugt zumindest 80 % der Oberfläche der Schaumkunststoffplatte.

Es ist möglich, Rahmen der Erfindung, dass die Kanäle für die Aufnahme der Rohre in die Wärmeleitplatte eingeformt sind bzw. aus der Wärmeleitplatte ausgeformt sind und somit die Kanalwandungen aus dem gleichen Material bestehen, wie die Wärmeleitplatte. Vorzugsweise sind die Kanäle mit der Maßgabe ausgelegt, dass sie die Rohre vollständig aufnehmen. Mit anderen Worten ragt bei dieser Ausführungsform kein Rohrbestandteil aus dem zugeordneten Kanal heraus. Eine besonders bevorzugte Ausführungsform der Erfindung ist **dadurch** gekennzeichnet, **dass** die Rohre in den Kanälen klemmend aufgenommen werden. Zweckmäßigerweise wird ein Rohr in einen zugeordneten Kanal eingerastet. Empfohlenermaßen weisen die Kanäle dazu Hinterschneidungen auf. Nach einer vorteilhaften Ausgestaltung der Erfindung sind die Kanäle im Querschnitt omega-förmig ausgebildet. Erfindungsgemäß weist eine Wärmeleitplatte eine Mehrzahl von Kanälen auf. Mehrzahl meint dabei zumindest zwei Kanäle, vorzugsweise zumindest drei Kanäle, bevorzugt zumindest vier Kanäle und besonders bevorzugt zumindest fünf Kanäle. Es ist möglich, dass eine Wärmeleitplatte eine Mehrzahl von zueinander parallelen linearen bzw. geradlinigen Kanälen für die Rohre aufweist.

Es ist möglich, dass die Kanäle für die Rohre aus der Rückseite der Wärmeleitplatte vorspringen und in Aufnahmekanäle eingreifen, die in der Vorderseite der Schaumkunststoffplatte vorgesehen sind. Nach dieser Ausführungsform ragen also die Kanäle aus der rückseitigen Oberfläche der Wärmeleitplatte hervor und greifen in komplementäre Aufnahmekanäle der Schaumkunststoffplatte ein. Zweckmäßigerweise liegt die rückseitige Oberfläche der Wärmeleitplatte in den Bereichen außerhalb der Kanäle bzw. Aufnahmekanäle flächig an der vorderseitigen Oberfläche der Schaumkunststoffplatte an.

Gemäß empfohlener Ausführungsform der Erfindung weist die Wärmeleitplatte zumindest eine Sollbruchstelle auf, die vorzugsweise linienförmig bzw. geradlinig ausgebildet ist. Nach einer bevorzugten Ausführungsvariante verläuft die zumindest eine Sollbruchstelle senkrecht bzw. im Wesentlichen senkrecht zu Kanälen bzw. zu den Kanälen der Wärmeleitplatte. Zweckmäßigerweise weist die Schaumkunststoffplatte eine mit der Sollbruchstelle fluchtende Schneidmarkierung auf, die beispielsweise als Schneidkante ausgebildet sein kann. Mit Hilfe der Schneidmarkierung kann also auch die Schaumkunststoffplatte entsprechend der Sollbruchstelle in der Wärmeleitplatte in zwei Teile zerteilt bzw. zerschnitten werden. Bei Bedarf bzw. entsprechend den räumlichen Gegebenheiten kann also die Platte durch Auftrennen bzw. Aufbrechen der Sollbruchstelle in der Wärmeleitplatte und zweckmäßigerweise durch Zerteilen bzw. Schneiden der darunter angeordneten Schaumkunststoffplatte in zwei kleinere Plattenteile aufgetrennt werden. Der Erfindung liegt insoweit die Erkenntnis zugrunde, dass es zweckmäßig ist, die Sollbruchstelle in der Wärmeleitplatte vorzusehen, die im Vergleich zu der Schaumkunststoffplatte in der Regel den Plattenbestandteil mit der höheren Dichte bildet. Es liegt natürlich auch im Rahmen der Erfindung, dass die Wärmeleitplatte mehrere - zweckmäßigerweise lineare - Sollbruchstellen aufweist, und die zugeordnete Schaumkunststoffplatte dann bevorzugt mit den Sollbruchstellen fluchtende Schneidmarkierungen aufweist. Dann kann die Platte auch in mehrere kleinere Plattenteile aufgetrennt werden.

Die Schaumkunststoffplatte besteht nach bevorzugter Ausführungsform aus schäumbarem Polystyrol (EPS). Zweckmäßigerweise beträgt die Dicke der Schaumkunststoffplatte 15 bis 50 mm und vorzugsweise 20 bis 40 mm. Diese Dicke bezieht sich bei vorhandenen Aufnahmekanälen in der Schaumkunststoffplatte auf die Bereiche außerhalb der Aufnahmekanäle.

Es wird empfohlen, dass die Schaumkunststoffplatte mit zumindest einer an ihrer Rückseite werksseitig fixierten Verstärkungsschicht verstärkt ist. Nach besonders empfohlener Ausführungsform der Erfindung ist die Verstärkungsschicht stoffschlüssig mit der Rückseite der Schaumkunststoffplatte verbunden und vorzugsweise an die Rückseite der Schaumkunststoffplatte angeklebt. Die Verstärkungsschicht kann auch mit der Rückseite der Schaumkunststoffplatte verschweißt oder verschmolzen sein. Es ist möglich, dass die Verstärkungsschicht den Großteil der rückseitigen Fläche der Schaumkunststoffplatte bedeckt. Zweckmäßigerweise bedeckt die Verstärkungsschicht zumindest 60 %, vorzugsweise zumindest 70 %, bevorzugt zumindest 80 % und besonders bevorzugt zumindest 90 % der rückseitigen Oberfläche der Schaumkunststoffplatte. Wenn die Wärmeleitplatte die vorstehend erläuterte zumindest eine Sollbruchstelle aufweist, ist an der Verstärkungsschicht zweckmäßigerweise eine entsprechende fluchtende Schneidmarkierung vorgesehen.

Es ist möglich, dass die Verstärkungsschicht für die Schaumkunststoffplatte ein Gewebe und/oder ein Gewirk und/oder ein Vlies und/oder eine Folie ist. Wenn ein Gewebe als Verstärkungsschicht eingesetzt wird, handelt es sich vorzugsweise um ein Glasfasergewebe oder um ein Kunststofffasergewebe, insbesondere um ein Gewebe aus Polyethylenterephthalat-Fasern (PET-Fasern). Wenn ein Vlies als Verstärkungsschicht verwendet wird, handelt es sich bevorzugt um ein Glasfaservlies oder um ein Spinnvlies aus Kunststofffasern bzw. Kunststofffilamenten. Als Kunststofffilamente empfehlen sich vor allem Polyolefinfilamente, insbesondere Polypropylenfilamente. Gemäß einer anderen Ausführungsvariante handelt es sich bei dem Verstärkungsvlies um ein Vlies aus Polyesterfasern bzw. Polyesterfilamenten. Eine Ausführungsform der Erfindung ist **dadurch gekennzeichnet, dass** eine Kunststofffolie als Verstärkungsschicht eingesetzt wird. Zweckmäßigerweise ist die Dicke der Verstärkungsschicht geringer als die Dicke der Schaumkunststoffplatte. Empfohlenermaßen ist die Dicke der Verstärkungsschicht geringer als die halbe Dicke der Schaumkunststoffplatte.

Vorzugsweise ist das zumindest eine Verstärkungselement zumindest größtenteils und bevorzugt vollständig in die Schaumkunststoffplatte integriert bzw. eingebettet. Gemäß einer bevorzugten Ausführungsform sind Verstärkungselemente in Form von Streben bzw. Querstreben und/oder Profilen bzw. Winkelprofilen vorgesehen, die die Schaumkunststoffplatte zumindest teilweise durchsetzen. Bei dem zumindest einen Verstärkungselement für die Schaumkunststoffplatte kann es sich nach einer Ausführungsvariante auch um eine in die Schaumkunststoffplatte integrierte Verstärkungsschicht handeln und insbesondere auch um eine oben näher spezifizierte Verstärkungsschicht.

Gemäß einer vorzugsweisen Ausführungsform weist die Wärmeleitplatte zur Verstärkung der Platte quer zu den Kanälen verlaufende Verstärkungssicken auf. Nach einer besonders vorzugsweisen Ausführungsform der Erfindung verlaufen diese Verstärkungssicken senkrecht oder im Wesentlichen senkrecht zu den Kanälen für die Aufnahme der Rohre. Es ist möglich, dass die Verstärkungssicken zur Schaumkunststoffplatte hin aus der Wärmeleitplatte ausgeformt sind. Die Verstärkungssicken stehen dann also aus der Oberfläche der Wärmeleitplatte zur Schaumkunststoffplatte hin vor. Zweckmäßigerweise ist die raumseitige Oberfläche bzw. die von der Schaumkunststoffplatte abgewandte Oberfläche der Wärmeleitplatte in den Bereichen außerhalb der zur Schaumkunststoffplatte vorstehenden Kanäle und Verstärkungssicken eben bzw. im Wesentlichen eben ausgebildet. Es ist möglich, dass die Verstärkungssicken durch die Kanäle für die Aufnahme der Rohre verlaufen und dabei quer zur Längsrichtung der Kanäle orientiert sind. Die Verstärkungssicken können in den Bereichen außerhalb der Kanäle verlaufen und/oder durch die Kanäle für die Aufnahme der Rohre.

Zweckmäßigerweise handelt es sich bei den Verstärkungssicken um durchgehende bzw. unterbrechungsfreie Verstärkungssicken. Grundsätzlich können aber auch Unterbrechungen in Längsrichtung der Verstärkungssicken vorgesehen sein.

Es ist möglich, dass ein Rohr für das Wärmeträgermedium schlangenförmig in der Platte verlegt ist. Das Rohr weist dann geradlinige Rohrabschnitte und bogenförmige Rohrumlenkabschnitte auf. Vorzugsweise sind in der erfindungsgemäßen Platte Umlenkungskanäle für die Rohrumlenkabschnitte vorgesehen. Nach sehr bevorzugter Ausführungsform der Erfindung ist die Schaumkunststoffplatte mit einstückig angeformten Kopfteilen ausgestattet, in denen Umlenkungskanäle für die Rohre vorgesehen sind. Einstückig angeschlossen meint hier, dass die Kopfteile Bestandteile der Schaumkunststoffplatte sind. Nach einer alternativen Ausführungsform der Erfindung, sind zumindest an den Stirnseiten der Schaumkunststoffplatte separate Kopfteile angeschlossen, in denen Umlenkungskanäle für die Rohre vorgesehen sind. Empfohlenermaßen sind diese separaten Kopfteile über Formschlusselemente formschlüssig an die Schaumkunststoffplatte angeschlossen. Gemäß einer Ausführungsvariante weisen die Kopfteile Zapfen auf, mit denen sie in entsprechende Ausnehmungen der Schaumkunststoffplatte formschlüssig einfassen. Zweckmäßigerweise bestehen die separaten Kopfteile aus Schaumstoff.

Die Kopfteile mit den Umlenkungskanälen sind nach einer Ausführungsform in dem an die Schaumkunststoffplatte angeschlossenen Zustand nicht von der Wärmeleitplatte abgedeckt. Bei dieser Ausführungsform stehen die Kopfteile also gleichsam aus dem Aggregat aus Wärmeleitplatte und Schaumkunststoffplatte vor. Eine bevorzugte Ausführungsform der Erfindung ist **dadurch gekennzeichnet, dass** in den Kopfteilen neben den Umlenkungskanälen auch geradlinige Anschlusskanäle vorgesehen sind, die mit den geradlinigen Kanälen in der Wärmeleitplatte fluchten. Bei dieser Ausführungsform kann also wahlweise eine Umlenkung des Rohres oder eine Fortführung einer geradlinigen Rohrerstreckung erfolgen, insbesondere für eine Anbindung von Vor- bzw. Rücklauf des Heiz- bzw. Kühlrohrkreislaufes.

Nach einer empfohlenen Ausführungsvariante sind Umlenkungskanäle und bevorzugt auch geradlinige Anschlusskanäle im Bereich zumindest einer Sollbruchstelle in der Schaumkunststoffplatte vorhanden. Zweckmäßigerweise sind diese Umlenkungskanäle und bevorzugt auch geradlinige Anschlusskanäle an beiden Seiten einer linearen Sollbruchstelle vorhanden. Durch Entfernung von Wärmeleitplattenteilen an der Sollbruchstelle können Kopfteile der Schaumkunststoffplatte mit den Umlenkungskanälen und bevorzugt auch mit den geradlinigen Anschlusskanälen erhalten werden.

In vorteilhafter Ausgestaltung der Erfindung weist die Platte zumindest bereichsweise eine rückseitige Klebeschicht auf, mit welcher Klebeschicht die Platte an einem Untergrund positionierbar bzw. fixierbar ist. Wenn nach bevorzugter Ausführungsform eine rückseitige Verstärkungsschicht vorgesehen ist, kann die Klebeschicht sich auf dieser Verstärkungsschicht befinden. Die Ausführungsform mit der rückseitigen Klebeschicht eignet sich insbesondere für die Montage der erfindungsgemäßen Platten an Wänden und/oder Decken eines Raumes bzw. Gebäudes. Wenn separate Kopfstücke mit Umlenkungskanälen vorgesehen sind, weisen zweckmäßigerweise auch diese Kopfstücke zumindest bereichsweise eine rückseitige Klebeschicht auf. Es ist möglich , dass die Platte Befestigungsöffnungen und/oder Befestigungsmittel für die Fixierung der Platte an einem Untergrund aufweist, insbesondere für die Verschraubung an Wänden und/oder Decken. Vorzugsweise ist im Bereich einer Befestigungsöffnung und/oder eines Befestigungsmittels zumindest ein Stützelement in der Schaumkunststoffplatte vorgesehen. Mit dem Stützelement wird eine lokale Stabilisierung der Schaumkunststoffplatte beim Fixieren der Platte, insbesondere beim Verschrauben an einem Untergrund erreicht. Bei dem Stützelement kann es sich insbesondere um ein U-förmiges Stützelement handeln, das mit seinen U-Schenkeln in die Schaumkunststoffplatte eingedrückt ist, wobei sich die U-Schenkel dann zweckmäßigerweise auf dem Untergrund abstützen, an dem die Platte fixiert wird. Die U-Basis des U-förmigen Stützelementes liegt dann bevorzugt an der Wärmeleitplatte an.

Die mehrschichtige Platte wird bevorzugt wie nachfolgend beschrieben hergestellt und montiert. Zunächst wird werksseitig eine Schaumkunststoffplatte vorderseitig mit einer Wärmeleitplatte verbunden, welche Wärmeleitplatte eine Mehrzahl von Kanälen für die Aufnahme von Rohren für ein Wärmeträgermedium aufweist,
wobei die Schaumkunststoffplatte fernerhin werksseitig mit zumindest einem in die Schaumkunststoffplatte integrierten Verstärkungselement verstärkt wird
und wobei zumindest ein Rohr für ein Wärmeträgermedium erst am Montageort der Platte in die Platte eingebracht bzw. eingepasst wird. Die Schaumkunststoffplatte wird zweckmäßigerweise werksseitig mit der Wärmeleitplatte verklebt. Es ist auch eine Klemmverbindung zwischen Schaumkunststoffplatte und Wärmeleitplatte möglich. - Montageort meint den Ort bzw. den Raum, in dem die erfindungsgemäße Platte an einem Boden, einer Wand oder einer Decke montiert werden soll.

Gemäß bevorzugter Ausführungsform wird die Platte zunächst an dem zugeordneten Boden, der zugeordneten Wand oder der zugeordneten Decke positioniert und fixiert und erst danach wird zumindest ein Rohr in die Platte eingebracht bzw. eingepasst. Zweckmäßigerweise wird die Platte zunächst mittels zumindest einer rückseitigen Klebeschicht positioniert und anschließend mit Befestigungsmitteln fixiert und danach wird das zumindest eine Rohr in die Platte eingebracht bzw. eingepasst. Die Fixierung erfolgt vorzugsweise durch Verschraubung. Diese Verschraubung wird insbesondere an Wänden und/oder Decken eines Raumes durchgeführt. Bei der Montage an einem Boden ist eine Verschraubung nicht zwingend erforderlich.

Der Erfindung liegt die Erkenntnis zugrunde, dass mit einer erfindungsgemäßen mehrschichtigen Platte eine einfache, wenig aufwendige, funktionssichere und zwangfreie Montage möglich ist. Beim Einpassen der Rohre am Montageort können aufgrund der erfindungsgemäßen Ausgestaltung der Platte nachteilhafte Biegungen der Platte und insbesondere Beschädigungen der Platte vermieden werden. Die Ausgestaltung ermöglicht auch die problemlose Montage relativ großflächiger Plattenelemente. Für die Montage wird im Vergleich zu den aus dem Stand der Technik bekannten Maßnahmen nur eine relativ geringe Anzahl von Rohrverbindern benötigt. Dadurch werden Aufwand und Kosten natürlich verringert. Es ist auch darauf hinzuweisen, dass die Platte auf verhältnismäßig einfache und wenig aufwendige sowie kostengünstige Weise herstellbar ist. Mit den vorzugsweise vorgesehenen Sollbruchstellen in den Wärmeleitplatten ist eine besonders flexible und zügige Montage der Platten möglich.

Nachfolgend wird eine mehrschichtige Platte beschrieben, die nicht unforden Schutzbereich der Ansprüche fällt. Es zeigen schematischer Darstellung:
- Fig. 1: eine Draufsicht auf eine mehrschichtige Platte,
- Fig. 2: einen Schnitt A-A durch den Gegenstand gemäß Fig. 1,
- Fig. 3: einen vergrößerten Ausschnitt B aus der Fig. 2,
- Fig. 4: eine Ansicht eines separaten Kopfteils für die Platte und
- Fig. 5: eine schematische Darstellung einer mit Platten realisierten Wandheizung.

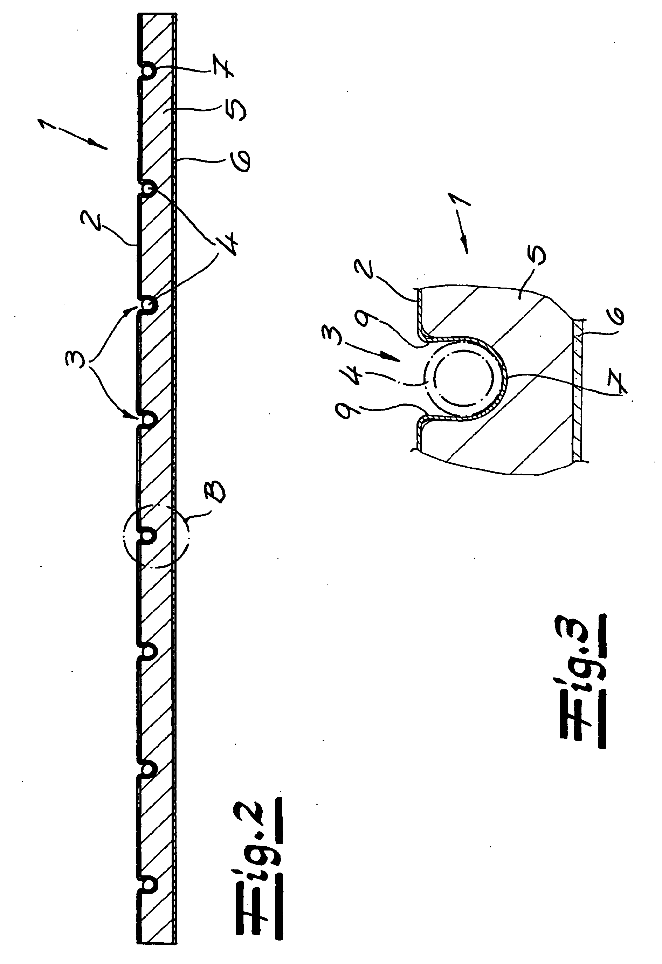

Die Figuren zeigen mehrschichtige Platten 1 zum Heizen und/oder Kühlen von Gebäuden bzw. von Räumen in Gebäuden. Eine mehrschichtige Platte 1 weist eine Wärmeleitplatte 2 aus einem Material hoher Wärmeleitfähigkeit auf. Vorzugsweise und im Ausführungsbeispiel handelt es sich um eine Wärmeleitplatte 2 aus Aluminiumblech. In der Wärmeleitplatte 2 ist eine Mehrzahl von Kanälen 3 für die Aufnahme von Rohren 4 vorgesehen. Die Rohre 4 werden von einem Wärmeträgermedium durchströmt. Die Wärmeleitplatte 2 ist mit ihrer Rückseite bzw. mit ihrer Unterseite an eine Schaumkunststoffplatte 5 angeschlossen. Nach besonders bevorzugter Ausführungsform und im Ausführungsbeispiel ist die Schaumkunststoffplatte 5 mit einer an ihrer Rückseite fixierten Verstärkungsschicht 6 verstärkt. Es wird diese Verstärkungsschicht 6 bereits werksseitig bei der Herstellung der mehrschichtigen Platte 1 aufgebracht und vorzugsweise an die Rückseite der Schaumkunststoffplatte 5 angeklebt. Die Platte 1 wird im Übrigen ohne in den Kanälen aufgenommenen Rohren 4 werksseitig gefertigt und die Rohre 4 werden erst am Montageort in die Kanäle 3 der Platte 1 eingebracht. Der Fig. 2 ist entnehmbar, dass die Kanäle 3 für die Rohre 4 aus der Rückseite der Wärmeleitplatte 2 vorspringen und in Aufnahmekanäle 7 eingreifen, die in der Vorderseite bzw. Oberseite der Schaumkunststoffplatte 5 vorgesehen sind. Zweckmäßigerweise und im Ausführungsbeispiel greifen die Kanäle 3 der Wärmeleitplatte 2 formschlüssig in die Aufnahmekanäle 7 der Schaumkunststoffplatte 5 ein. In der Fig. 2 ist erkennbar, dass die Rückseite der Wärmeleitplatte 2 flächig an der Vorderseite der Schaumkunststoffplatte 5 aufliegt.

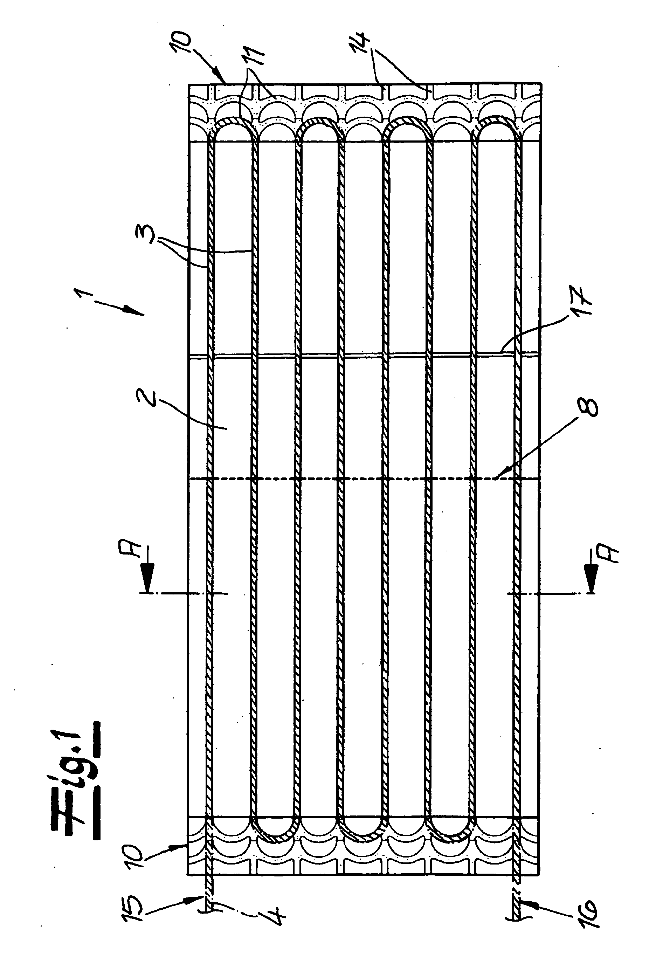

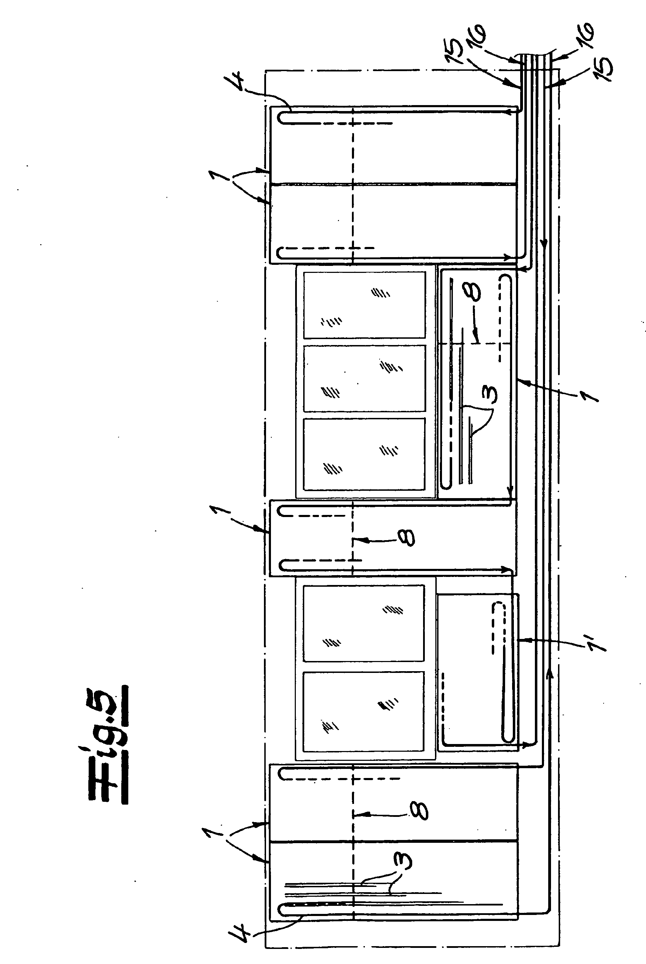

Im Ausführungsbeispiel weist die Wärmeleitplatte 2 eine lineare Sollbruchstelle 8 auf (Fig. 1 und 5). Durch Aufbrechen der Sollbruchstelle 8 der Wärmeleitplatte 2 und durch Schneiden der darunter befindlichen Schaumkunststoffplatte 5 entlang einer mit der Sollbruchstelle 8 fluchtenden Linie können kleinere Plattenteile 1' erhalten werden. Wie der Fig. 5 entnehmbar ist, ermöglichen diese abgetrennten kleineren Platten 1' eine flexible und vollflächige Verlegung von Heiz- bzw. Kühlkreisläufen.

Im Ausführungsbeispiel sind die Kanäle 3 in die Wärmeleitplatte 2 eingeformt bzw. aus der Wärmeleitplatte 2 ausgeformt. Sie sind also integraler Bestandteil der Wärmeleitplatte 2 und bestehen somit aus dem gleichen Material wie die Wärmeleitplatte 2. Im Ausführungsbeispiel sind die Kanäle 3 für eine klemmende und/oder rastende Aufnahme der Rohre 4 vorgesehen. Im Ausführungsbeispiel nach Fig. 3 sind die Kanäle 3 im Querschnitt omega-förmig ausgebildet und sind somit mit Hinterschneidungen 9 zur rastenden bzw. klemmenden Aufnahme der Rohre 4 ausgestattet.
Im Ausführungsbeispiel (Fig. 1) weist die Wärmeleitplatte 2 zur Verstärkung der Platte 1 quer zu den Kanälen 3 verlaufende Verstärkungssicken 17 auf. In der Fig. 1 ist der Einfachheit halber lediglich eine Verstärkungssicke 17 eingezeichnet worden. Es ist eine Mehrzahl quer zu den Kanälen 3 verlaufende Verstärkungssicken 17 vorgesehen, wobei die Verstärkungssicken 17 zweckmäßigerweise parallel zueinander verlaufen. Vorzugsweise sind die Verstärkungssicken 17 zur Schaumkunststoffplatte 5 hin aus der Wärmeleitplatte 2 ausgeformt. Die Tiefe der Verstärkungssicken 17 ist geringer bzw. wesentlich geringer als die Tiefe der Kanäle 3. In der Fig. 1 ist erkennbar, dass die Verstärkungssicken 17 nach bevorzugter Ausführungsform sowohl in Bereichen außerhalb der Kanäle 3 verlaufen als auch durch die Kanäle 3 verlaufen.

Im Ausführungsbeispiel nach Fig. 1 weist die Schaumkunststoffplatte 5 an ihren Stirnseiten einstückig angeschlossene Kopfteile 10 auf, in denen bogenförmige Umlenkungskanäle 11 für die Rohre 4 vorgesehen sind. Mit diesen Umlenkungskanälen 11 wird im Ausführungsbeispiel eine Umlenkung der Rohre 4 um 180° erreicht. Im Ausführungsbeispiel nach Fig. 1 sind die Kopfteile 10 also Bestandteil der Schaumkunststoffplatte 5 und bestehen somit auch aus dem gleichen Material wie die Schaumkunststoffplatte 5.

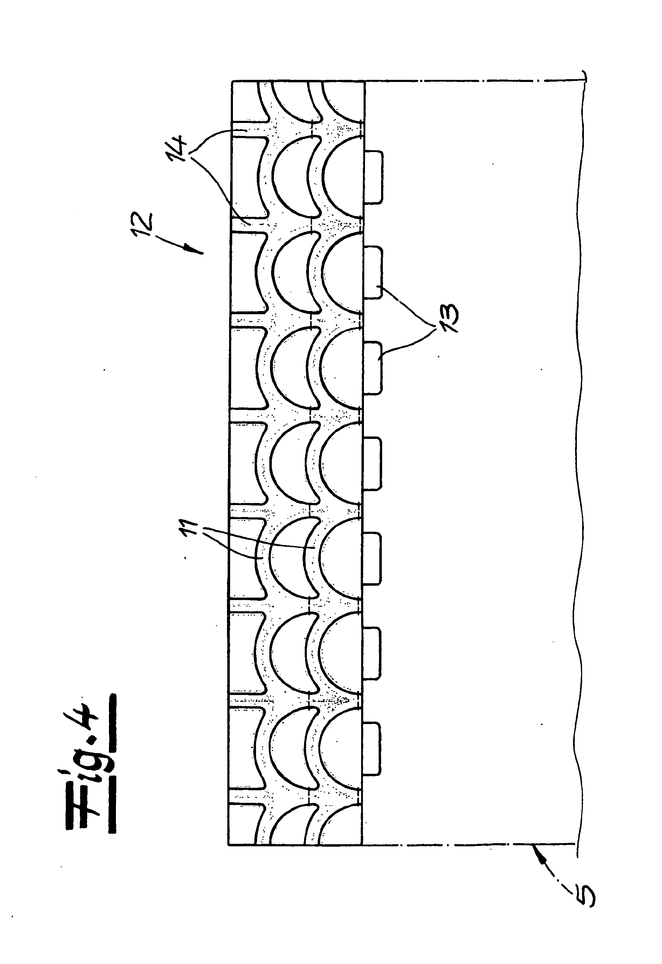

Gemäß einer alternativen Ausführungsform können auch separate Kopfteile 12 an den Stirnseiten der Schaumkunststoffplatte 5 angeschlossen werden. Ein solches separates Kopfteil 12 zeigt die Fig. 4. Das separate Kopfteil 12 weist Zapfen 13 als Formschlusselemente auf, die in entsprechende komplementäre, nicht dargestellte Ausnehmungen der zugeordneten Schaumkunststoffplatte 5 eingreifen können.

In einem angeformten Kopfteil 10 und in einem separaten Kopfteil 12 sind im Ausführungsbeispiel neben den Umlenkungskanälen 11 für die Rohre 4 auch geradlinige Anschlusskanäle 14 vorhanden, die der geradlinigen Rohrfortführung dienen können und insbesondere der Anbindung von Vorlauf 15 und Rücklauf 16 des Heizkreislaufes bzw. Kühlkreislaufes. Das ist in den Fig. 1 und 5 dargestellt worden. Die Kopfteile 10, 12 ermöglichen also wahlweise die Umlenkung der Rohre 4 oder die geradlinige Fortführung der Rohre 4.

In der Fig. 5 ist im Übrigen die Verwirklichung einer Wandheizung mit mehrschichtigen Platten 1 dargestellt. Die Platten 1 werden dazu an nicht dargestellten Wandprofilen zweckmäßigerweise durch Verschraubung fixiert. Nach Fixierung der Platten 1 und nach Einbringung der Rohre 4 wird eine in der Fig. 5 nicht dargestellte Wandbeplankung vor die Platten 1 vorgesetzt.

## Patentansprüche

1. Mehrschichtige Platte (1) zum Heizen und/oder Kühlen von Gebäuden, wobei zumindest eine Wärmeleitplatte (2) aus einem Material hoher Wärmeleitfähigkeit vorgesehen ist,
wobei die Wärmeleitplatte (2) eine Mehrzahl von Kanälen (3) für die Aufnahme von Rohren (4) für ein Wärmeträgermedium aufweist,
wobei die Wärmeleitplatte (2) mit ihrer Rückseite an eine Schaumkunststoffplatte (5) angeschlossen ist bzw. in eine Schaumkunststoffplatte 5 eingebettet ist
**dadurch gekennzeichnet, dass**
die Schaumkunststoffplatte (5) mit zumindest einem die Schaumkunststoffplatte (5) zumindest teilweise durchsetzenden Verstärkungselement verstärkt ist und
dass die Verstärkungselemente zumindest zum Teil an der Wärmeleitplatte (2) anliegen.

2. Mehrschichtige Platte nach Anspruch 1, wobei die Wärmeleitplatte (2) zur Verstärkung der Platte (1) quer zu den Kanälen (3) für die Aufnahme der Rohre (4) verlaufende Verstärkungssicken (17) aufweist.

3. Mehrschichtige Platte nach einem der Ansprüche 1 bis 2, wobei die Wärmeleitplatte (2) aus einem Metall und/oder aus Kohlenstoff, insbesondere aus Graphit besteht.

4. Mehrschichtige Platte nach einem der Ansprüche 1 bis 3, wobei die Kanäle (3) für die Rohre (4) aus der Rückseite der Wärmeleitplatte (2) vorspringen und in Aufnahmekanäle (7) eingreifen, die in der Vorderseite der Schaumkunststoffplatte (5) vorgesehen sind.

5. Mehrschichtige Platte nach einem der Ansprüche 1 bis 4, wobei die Wärmeleitplatte (2) zumindest eine Sollbruchstelle (8) aufweist.

6. Mehrschichtige Platte nach einem der Ansprüche 1 bis 5, wobei die Schaumkunststoffplatte (5) mit zumindest einer an ihrer Rückseite fixierten Verstärkungsschicht (6) verstärkt ist, wobei vorzugsweise die Verstärkungsschicht (6) stoffschlüssig mit der Rückseite der Schaumkunststoffplatte (5) verbunden ist, und besonders vorzugsweise an die Rückseite der Schaumkunststoffplatte (5) angeklebt ist.

7. Mehrschichtige Platte nach Anspruch 6, wobei die Verstärkungsschicht (6) ein Gewebe und/oder ein Gewirk und/oder ein Vlies und/oder eine Folie ist.

8. Mehrschichtige Platte nach einem der Ansprüche 1 bis 7, wobei mehr als ein Verstärkungselement vorgesehen ist und wobei die Verstärkungselemente in Form von Streben und/oder Profilen vorgesehen sind, die zumindest teilweise in die Schaumkunststoffplatte (5) eingeschäumt sind.

9. Mehrschichtige Platte nach einem der Ansprüche 1 bis 8, wobei die Schaumkunststoffplatte (5) einstückig angeschlossene Kopfteile (10) aufweist, in denen Umlenkungskanäle (11) für die Rohre (4) vorgesehen sind.

10. Mehrschichtige Platte nach einem der Ansprüche 1 bis 8, wobei zumindest an den Stirnseiten der Schaumkunststoffplatte (5) separate Kopfteile (12) angeschlossen sind, in denen Umlenkungskanäle (11) für die Rohre (4) vorgesehen sind.

11. Mehrschichtige Platte nach einem der Ansprüche 1 bis 10, wobei die Platte (1) Befestigungsöffnungen und/oder Befestigungsmittel zur Fixierung der Platte (1) auf einem Untergrund aufweist und wobei im Bereich einer Befestigungsöffnung und/oder eines Befestigungsmittels zumindest ein Stützelement zur lokalen Stabilisierung in der Schaumkunststoffplatte (5) vorgesehen ist.

## Claims

1. A multilayer plate (1) for heating and/or cooling buildings, wherein at least one heat conducting plate (2) made out of a material with a high thermal conductivity is provided,
wherein the heat conducting plate (2) exhibits a plurality of channels (3) for accommodating pipes (4) for a heat transfer medium,
wherein the rear side of the heat conducting plate (2) is connected to a foam plastic plate (5) or embedded in a foam plastic plate (5),
**characterized in that**
the foam plastic plate (5) is reinforced with at least one reinforcing element that at least partially penetrates through the foam plastic plate (5), and that
the reinforcing elements at least partially abut against the heat conducting plate (2).

2. The multilayer plate according to claim 1, wherein the heat conducting plate (2) exhibits reinforcing beads (17) running transverse to the channels (3) for accommodating the pipes (4) so as to reinforce the plate (1).

3. The multilayer plate according to one of claims 1 to 2, wherein the heat conducting plate (2) consists of a metal and/or carbon, in particular of graphite.

4. The multilayer plate according to one of claims 1 to 3, wherein the channels (3) for the pipes (4) project out of the rear side of the heat conducting plate (2), and engage into receiving channels (7) provided in the front side of the foam plastic plate (5).

5. The multilayer plate according to one of claims 1 to 4, wherein the heat conducting plate (2) exhibits at least one predetermined breaking point (8).

6. The multilayer plate according to one of claims 1 to 5, wherein the foam plastic plate (5) is reinforced with at least one reinforcing layer (6) fixed to its rear side, wherein the reinforcing layer (6) is preferably materially bonded with the rear side of the foam plastic plate (5), and especially preferably glued to the rear side of the foam plastic plate (5).

7. The multilayer plate according to claim 6, wherein the reinforcing layer (6) is a textile and/or a knit and/or a nonwoven and/or a film.

8. The multilayer plate according to one of claims 1 to 7, wherein more than one reinforcing element is provided, and wherein the reinforcing elements are provided in the form of webs and/or profiles, which are at least partially foamed into the foam plastic plate (5).

9. The multilayer plate according to one of claims 1 to 8, wherein the foam plastic plate (5) exhibits one-piece connected top parts (10), in which deflection channels (11) for the pipes (4) are provided.

10. The multilayer plate according to one of claims 1 to 8, wherein at least the faces of the foam plastic plate (5) have connected to them separate top parts (12), in which deflection channels (11) for the pipes (4) are provided.

11. The multilayer plate according to one of claims 1 to 10, wherein the plate (1) exhibits mounting openings and/or fasteners for fixing the plate (1) onto a substrate, and wherein at least one support element for purposes of local stabilization on the foam plastic plate (5) is provided in the area of a mounting opening and/or a fastener.

## Revendications

1. Panneau multicouches (1) pour le chauffage et/ou le refroidissement de bâtiments, dans lequel il est prévu au moins un panneau thermoconducteur (2) constitué d'un matériau hautement conducteur de chaleur,
dans lequel le panneau thermoconducteur (2) présente une pluralité de canaux (3) destinés à recevoir des conduits (4) pour un fluide caloporteur,
dans lequel le panneau thermoconducteur (2) est relié avec son côté arrière à un panneau en mousse synthétique (5) ou enrobé dans un panneau en mousse synthétique (5),
**caractérisé en ce que**
le panneau en mousse synthétique (5) est renforcé par au moins un élément de renfort traversant au moins partiellement le panneau en mousse synthétique (5), et
les éléments de renfort s'appliquent au moins en partie sur le panneau thermoconducteur (2).

2. Panneau multicouches selon la revendication 1, dans lequel, pour renforcer le panneau (1), le panneau thermoconducteur (2) présente des nervures de renfort (17) s'étendant transversalement aux canaux (3) pour la réception des conduits (4).

3. Panneau multicouches selon l'une des revendications 1 à 2, dans lequel le panneau thermoconducteur (2) est constitué d'un métal et/ou de carbone, en particulier de graphite.

4. Panneau multicouches selon l'une des revendications 1 à 3, dans lequel les canaux (3) pour les conduits (4) font saillie à partir du côté arrière du panneau thermoconducteur (2) et s'engagent dans des canaux de réception (7) prévus dans le côté avant du panneau en mousse synthétique (5).

5. Panneau multicouches selon l'une des revendications 1 à 4, dans lequel le panneau thermoconducteur (2) présente au moins une zone de rupture théorique (8).

6. Panneau multicouches selon l'une des revendications 1 à 5, dans lequel le panneau en mousse synthétique (5) est renforcé avec au moins une couche de renfort (6) fixée à son côté arrière, la couche de renfort (6) étant de préférence reliée par adhérence de matière au côté arrière de la panneau en mousse synthétique (5), et de manière particulièrement préférentielle collée au côté arrière de la panneau en mousse synthétique (5).

7. Panneau multicouches selon la revendication 6, dans lequel la couche de renfort (6) est un tissu et/ou une étoffe et/ou un non-tissé et/ou un film.

8. Panneau multicouches selon l'une des revendications 1 à 7, dans lequel il est prévu plus d'un élément de renfort et dans lequel il est prévu des éléments de renfort en forme de bielles et/ou de profilés au moins partiellement enrobés dans la panneau en mousse synthétique (5).

9. Panneau multicouches selon l'une des revendications 1 à 8, dans lequel le panneau en mousse synthétique (5) présente des parties de tête (10) reliées d'un seul tenant, dans lesquelles il est prévu des canaux de déviation (11) pour les conduits (4).

10. Panneau multicouches selon l'une des revendications 1 à 8, dans lequel des parties de tête (12) séparées, dans lesquelles sont prévus des canaux de déviation (11) pour les conduits (4), sont reliées aux côtés frontaux du panneau en mousse synthétique (5).

11. Panneau multicouches selon l'une des revendications 1 à 10, dans lequel le panneau (1) présente des ouvertures de fixation et/ou des moyens de fixation pour la fixation du panneau (1) à un fond, et dans lequel au moins un élément d'appui est prévu dans la région d'une ouverture de fixation et/ou d'un moyen de fixation, pour la stabilisation locale dans le panneau en mousse synthétique (5).
